# EUROPEAN PATENT APPLICATION

(11) **EP 2 876 428 A1**
(43) Date of publication of application: **27.05.2015**
(21) Application number: 14194089.0
(22) Date of filing: 20.11.2014
(51) Int. Cl.: G01N 21/03, B01L 3/00, G01N 21/11

(54) **Microcuvette**

(30) Priority: 21.11.2013 CN 201310593603
(71) Applicant: DelBio Inc., Taoyuan County, Taiwan 33341 (TW)
(72) Inventor: Wang, Cheng, 33341 Taiwan, R.O.C. (TW); Xiong, Zhi-Yong, 33341 Taiwan, R.O.C. (TW); Xi, Zai-Jun, 33341 Taiwan, R.O.C. (TW); Zhao, Xiao-Zhi, 33341 Taiwan, R.O.C. (TW); Wang, Hui, 33341 Taiwan, R.O.C. (TW)
(74) Representative: Nederlandsch Octrooibureau

(57) **Abstract**

A microcuvette (100, 200, 300), comprising a body (110, 210, 310), the body (110, 210, 310) comprises a slit (120, 220, 320) inside, the slit (120, 220, 320) connects to an entry slit (130, 230, 330) and an exit slit (140, 240, 340), the entry slit (130, 230, 330) and the exit slit (140, 240, 340) are on the opposite sides of the body (110, 210, 310), the microcuvette (100, 200, 300) is characterized in that the slit (120, 220, 320) comprises:a drainage slit (122, 222, 322); an optical measuring slit (124, 224, 324); and a protecting slit (126, 226, 326), wherein the drainage slit (122, 222, 322) directly connects to the entry slit (130, 230, 330), the optical measuring slit (124, 224, 324), and the protecting slit (126, 226, 326), the protecting slit (126, 226, 326) at least partially surrounds the optical measuring slit (124, 224, 324), and connects to the exit slit (140, 240, 340), the drainage slit (122, 222, 322) has an average width not larger than the optical measuring slit (124, 224, 324), and the protecting slit (126, 226, 326) has a width larger than the optical measuring slit (124, 224, 324). The measuring slit (124) contains a transparent region (150).

## Description

### BACKGROUND

### Field of Invention

The present invention relates to a cuvette. More particularly, the present invention relates to an optical microcuvette for measuring small amount of liquid sample.

### Description of Related Art

A cuvette is a container for holding samples, and includes a transparent region. The transparent region of the cuvette with a sample is penetrated by light, and the concentration of a specific component in the sample is calculated by measuring the absorbance of the sample. Traditional cuvettes are made of glass, which the cost is high, and thus traditional cuvettes are used repeatedly. Therefore, traditional cuvette has to be cleaned after using, especially for the transparent region, to maintain cleanness and transparency. There cannot be any dirt or lint left on the cuvette, and the cuvette cannot be touched by hands to avoid leaving fingerprints, thereby preventing affecting the next measurement result. When measuring a large amount of samples, multiple cuvettes or repeated cleaning are needed, thereby affecting the efficiency of the measurement. If the cuvette is not thoroughly cleaned after using, the next measurement result is affected by the materials left inside the cuvette.

In order to solve the aforementioned problems, current cuvettes are designed to be disposable. The cuvette includes an entry slit and a measuring slit, and the width of the entry slit is smaller than that of the measuring slit. Samples are pulled into the measuring slit through the entry slit utilizing capillary action. There is a problem while using this kind of cuvette, which bubbles are easily produced in the measuring slit after introducing the sample into the cuvette. When there are bubbles inside the measuring slit, it is difficult to remove the bubbles. Because the bubbles inside the measuring slit will seriously affect the measurement result, the cuvette has to be disposed, and there is a need for resampling with a new cuvette. Furthermore, in practice, the inlet of the entry slit is wiped by a wipe to remove the sample left at the inlet after sampling by the cuvette. Due to the capillary force of the wipe, some sample inside the measuring slit is prone to be drawn out from the entry slit by the wipe. It is easy to produce bubbles in the measuring slit after the sample is drawn out, thereby affecting the measurement result.

Therefore, there is a need for a microcuvette, which can not only reduce the inconveniences of using traditional cuvettes but also solve the problems of currently used disposable cuvettes.

### SUMMARY

An objective of the present invention is to provide a microcuvette, which is a disposable cuvette, and can solve the problems existed in currently used disposable cuvette, and reduce factors affecting measurement results.

The microcuvette of the present invention includes a body, and the body includes a slit inside. The slit connects to an entry slit and an exit slit, and the entry slit and the exit slit are on the opposite side of the body. The microcuvette is characterized in that the slit includes a drainage slit, an optical measuring slit, and a protecting slit. The drainage slit directly connects to the entry slit, the optical measuring slit, and the protecting slit. The protecting slit at least partially surrounds the optical measuring slit and connects to the exit slit. The drainage slit has an average width not larger than the optical measuring slit, and the protecting slit has a width larger than the optical measuring slit.

According to one embodiment of the present invention, at least a portion of the protecting slit is located between the entry slit, the drainage slit, and the optical measuring slit.

According to one embodiment of the present invention, the protecting slit connects to the drainage slit, and surrounds the optical measuring slit.

According to one embodiment of the present invention, the slit includes a plurality of the protecting slits, and at least one of the protecting slits is located between the entry slit, the drainage slit, and the optical measuring slit.

According to one embodiment of the present invention, the optical measuring slit further includes a transparent region. The transparent region may be located in a portion of the optical measuring slit or the whole optical measuring slit, and the optical measuring slit may have a transparency higher than other parts of the body.

According to one embodiment of the present invention, the average width of the drainage slit is 0.1-0.3 mm. The width of the optical measuring slit may be 0.1-0.3 mm. The width of the protecting slit may be 0.2-0.4 mm.

The microcuvette of the present invention may be made of any suitable materials for making cuvette, such as hydrophilic, optically transparent polystyrene (PS) and poly(methyl methacrylate) (PMMA). According to one embodiment of the present invention, the microcuvette is an integrally molded structure. The mold for microcuvette molding includes foil, and a part of the foil corresponding for forming the transparent region in the optical measuring slit is polished to increase the transparency of the transparent region of the microcuvette made, which is beneficial for measuring light passing through.

The microcuvette of the present invention utilizes capillary action. Capillary force is inversely proportional to the slit width, and by adjusting the slit width of different areas, the capillary force of the drainage slit is not less than the optical measuring slit, and the capillary force of the protecting slit is less than the optical measuring slit. Therefore, in the process of introducing sample, the filling speed of the sample in the optical measuring slit is faster because of the capillary force, and thus the air inside the optical measuring slit is pushed into the protecting slit, and exhausted to outside the microcuvette through the exit slit. Even if there is air left in the slit of the microcuvette, bubbles exist within the protecting slit, not within the optical measuring slit, which can prevent the bubbles from affecting measurement results. Another function of the protecting slit is that when the cuvette is wiped by a wipe after sampling, some sample in the slit is drawn out because of the capillary action of the wipe, and the sample in the protecting slit is drawn out first, which can prevent the sample in the optical measuring slit from being drawn out through the entry slit by the wipe, and thus the accuracy of the measurement result is ensured.

### BRIEF DESCRIPTION OF THE DRAWINGS

The invention can be more fully understood by reading the following detailed description of the embodiment, with reference made to the accompanying drawings as follows:
Fig. 1A is a front view of a microcuvette according to an embodiment of the present invention.
Fig. 1B is a cross-sectional view through line A-A' of a microcuvette according to an embodiment of the present invention.
Fig. 1C is a top view of a microcuvette according to an embodiment of the present invention.
Fig. 1D is a bottom view of a microcuvette according to an embodiment of the present invention.
Fig. IE is a bottom view of a microcuvette according to an embodiment of the present invention.
Fig. 1F is a cross-sectional view through line A-A' of a microcuvette according to an embodiment of the present invention.
Fig. 2A is a front view of a microcuvette according to another embodiment of the present invention.
Fig. 2B is a cross-sectional view through line B-B' of a microcuvette according to another embodiment of the present invention.
Fig. 2C is a top view of a microcuvette according to another embodiment of the present invention.
Fig. 2D is a bottom view of a microcuvette according to another embodiment of the present invention.
Fig. 3A is a front view of a microcuvette according to yet another embodiment of the present invention.
Fig. 3B is a cross-sectional view through line C-C' of a microcuvette according to yet another embodiment of the present invention.
Fig. 3C is a top view of a microcuvette according to yet another embodiment of the present invention.
Fig. 3D is a bottom view of a microcuvette according to yet another embodiment of the present invention.
Fig. 4A is a cross-sectional view through line A"-A"' of a microcuvette according to an embodiment of the present invention.
Fig. 4B is a cross-sectional view through line B"-B"' of a microcuvette according to another embodiment of the present invention.
Fig. 4C is a cross-sectional view through line C"-C"' of a microcuvette according to yet another embodiment of the present invention.

### DETAILED DESCRIPTION

The detailed description provided below is intended as a description of the present examples and is not intended to represent the only forms in which the present example may be constructed or utilized. The description sets forth the functions of the example and the sequence of steps for constructing and operating the example. However, the same or equivalent functions and sequences may be accomplished by different examples. Therefore, the spirit and scope of the appended claims should not be limited to the description of the embodiments contained herein.

An objective of the present invention is to provide a microcuvette, which is a disposable cuvette, and has advantages of requiring small amount of sample and being convenient to use. Furthermore, based on the structural design of the microcuvette of the present invention, the possibility of producing bubbles in the optical measuring slit may be decreased, and when the cuvette is wiped by a wipe after sampling, the sample in the optical measuring slit being drawn out by the wipe is prevented to avoid affecting measurement results. Moreover, the structural design of the microcuvette can avoid generating interference factors while molding into an integrally molded structure.

Reference will now be made in detail to the present embodiments of the invention, examples of which are illustrated in the accompanying drawings. Wherever possible, the same reference numbers are used in the drawings and the description to refer to the same or like parts.

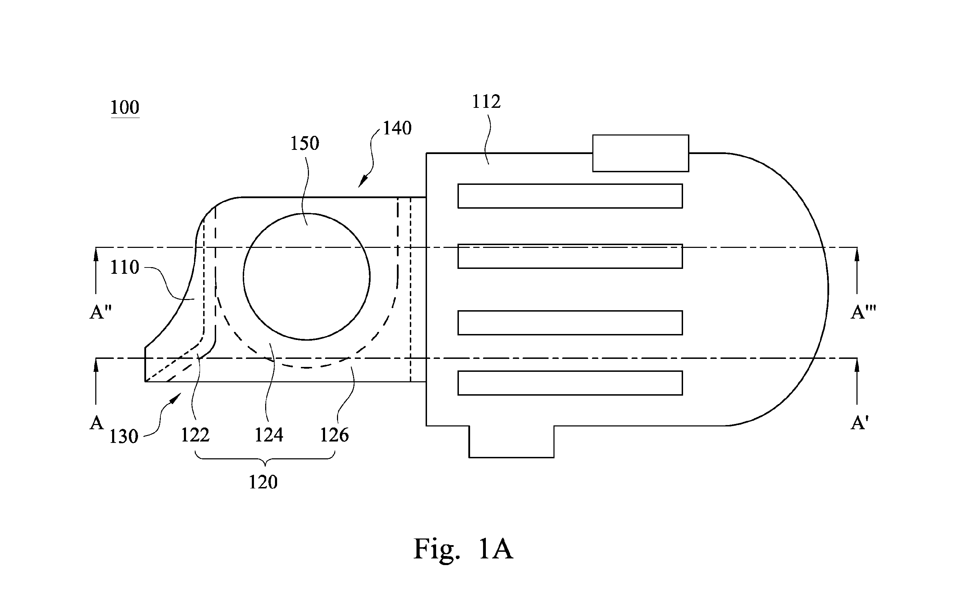

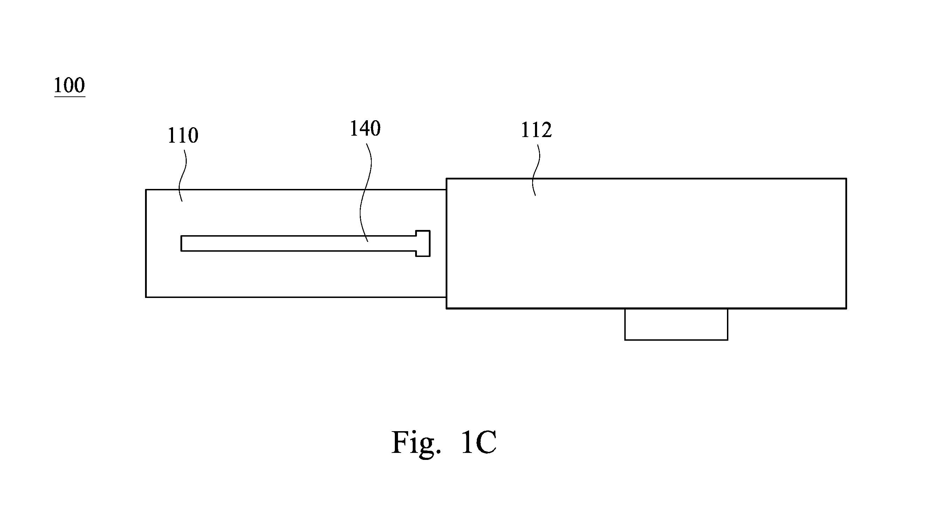

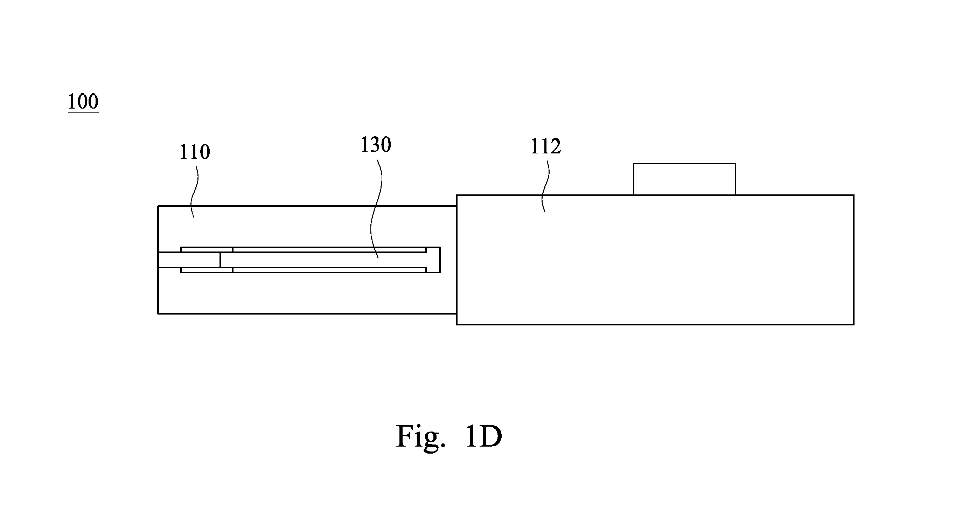

Referring to Figs. 1A, 1C, and 1D, which are a front view, a top view, and a bottom view of a microcuvette 100 according to an embodiment of the present invention respectively. Referring to Fig. 1A, the microcuvette 100 includes a body 110 and a grip 112, and the body 110 includes a slit 120, an entry slit 130, and an exit slit 140 inside. The slit 120 includes a drainage slit 122, an optical measuring slit 124, and a protecting slit 126. The drainage slit 122 directly connects to the entry slit 130, the optical measuring slit 124, and the protecting slit 126. The protecting slit 126 at least partially surrounds the optical measuring slit 124, and connects to the exit slit 140. The drainage slit 122 has an average width not larger than the optical measuring slit 124, and the protecting slit 126 has a width larger than the optical measuring slit 124. The dotted lines in Fig. 1A represent the junctions of different areas having different widths of the slit 120. Referring to Figs. 1C and 1D, the microcuvette 100 is sealed at the front, rear, left, and right sides, and the top and bottom sides of the microcuvette 100 are connected by the slit 120, the entry slit 130, and the exit slit 140. The positions and changes in width of the drainage slit 122, the optical measuring slit 124, and the protecting slit 126 can be seen through the exit slit 140 in the top view and the entry slit 130 in the bottom view.

In this embodiment, the entry slit 130 is connected to the drainage slit 122 and the protecting slit 126, and the exit slit 140 is connected to the drainage slit 122, the optical measuring slit 124, and the protecting slit 126. Furthermore, in this embodiment, the width of the drainage slit 122 is equal to that of the optical measuring slit 124, but the width of the optical measuring slit 124 is smaller than that of the protecting slit 126. Referring to Fig. 1C, the change in width at the junction of the optical measuring slit 124 and the protecting slit 126 can be observed by the exit slit 140. Referring to Fig. 1D, the drainage slit 122 and the protecting slit 126 can be observed by the entry slit 130, and the changes in width at the connecting places between the protecting slit 126 and the drainage slit 122 and between the protecting slit 126 and the optical measuring slit 124 can be observed through the protecting slit 126. In other words, the inner walls of the drainage slit 122 and the optical measuring slit 124 can be observed through the protecting slit 126.

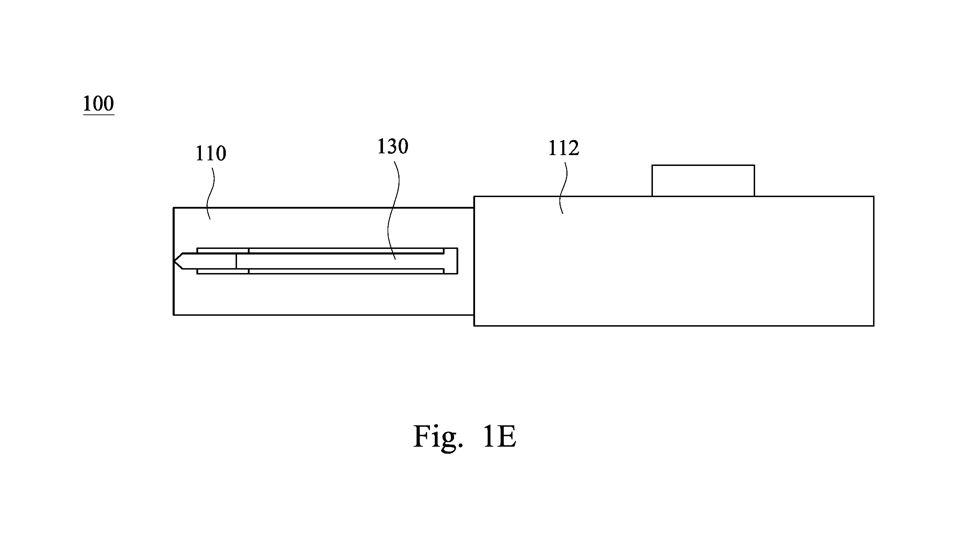

It is noteworthy that the shape of the drainage slit across a longitudinal direction thereof is not limited in the present invention. The shape of the drainage slit across the longitudinal direction may be shown in a top view, a bottom view, or a cross-sectional view. In some embodiments, the drainage slit has a variable width, and the width of the drainage slit described in the specification is an average width for that drainage slit. In some embodiments, the shape of the drainage slit across the longitudinal direction is a rectangle as shown in Fig. 1D. In other embodiments, the shape of the drainage slit across the longitudinal direction is a triangle. Fig. IE is another bottom view of the microcuvette 100 according to an embodiment of the present invention. The difference between the bottom views of Figs. 1D and 1E is the shape of the drainage slit 122, and as shown in Fig. IE, the shape of the drainage slit 122 is a triangle. Because the triangle does not have a uniform width, the width described in the specification is an average width for the drainage slit 122 shown in Fig. 1E.

When introducing sample into the microcuvette 100, the sample enters the microcuvette 100 from the entry slit 130. The sample flows into the drainage slit 122 and the protecting slit 126, and fills the drainage slit 122 first because the capillary force of the drainage slit 122 is larger than that of the protecting slit 126. Then, the sample gradually flows into and fills the optical measuring slit 124 and the protecting slit 126 through the connecting places between the drainage slit 122 and the optical measuring slit 124 and between the drainage slit 122 and the protecting slit 126. The sample enters the protecting slit 126 earlier than the optical measuring slit 124. However, because the capillary force of the optical measuring slit 124 is larger than that of the protecting slit 126, the sample flows faster in the optical measuring slit 124, and fills the optical measuring slit 124 earlier than the protecting alit 126. Therefore, the air in inside the optical measuring slit 124 is pushed into the protecting slit 126, which is not fully filled with the sample. In contrast, in current cuvette, the width of the entry slit is smaller than that of the measuring slit, and the measuring slit has a uniform width. Therefore, bubbles exist within the measuring slit, and are difficult to remove.

The optical measuring slit 124 further includes a transparent region 150 for measuring light passing through. In this embodiment, the transparent region 150 has a circular shape, and located in the middle of the optical measuring slit 124. However, the transparent region 150 can be any shape, and be located in any portion of the optical measuring slit 124 as actual need. In this embodiment, the optical measuring slit 124 has a transparency higher than other parts of the body 110.

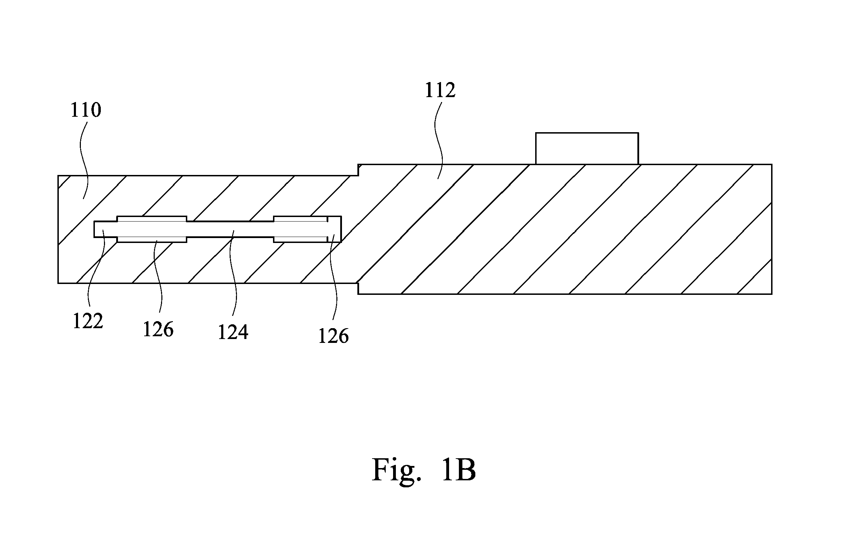

Fig. 1B is a cross-sectional view through line A-A' of the microcuvette 100, which the change in width of the slit 120 can be observed by this cross-sectional view. In this embodiment, because the width of the protecting slit 126 is larger than that of the drainage slit 122 and the optical measuring slit 124, this cross-sectional view shows the changes in width at the junctions of the drainage slit 122, the optical measuring slit 124, and the protecting slit 126. The change in width at the connecting place between the protecting slit 126 and the optical measuring slit 124 can be also observed by this cross-sectional view through line A-A' of the microcuvette 100. Therefore, the cross-sectional view through line A-A' of the microcuvette 100 at the part of the protecting slit 126 includes the inner walls of the protecting slit 126 and the inner walls of the optical measuring slit 124.

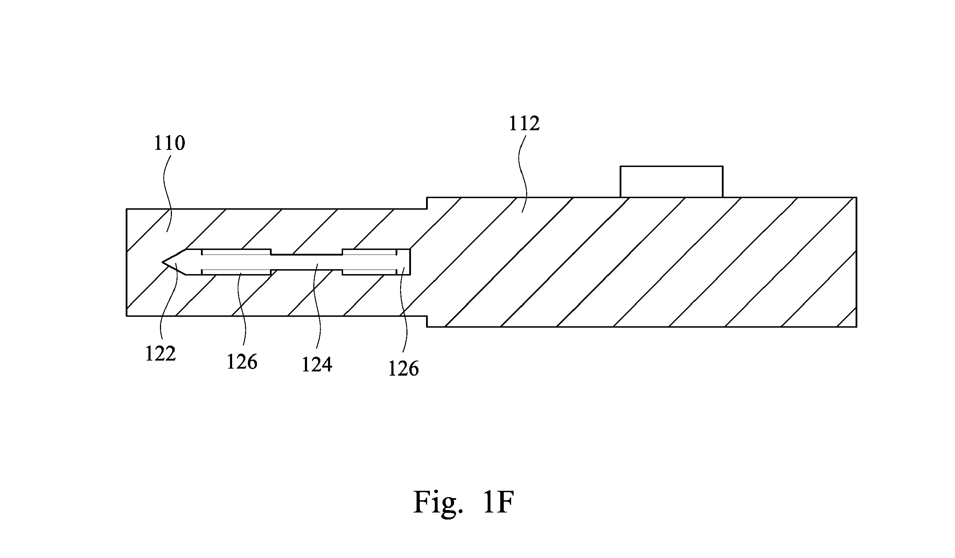

As mentioned above, the shape of the drainage slit across a longitudinal direction thereof is not limited in the present invention. In some embodiments, the shape of the drainage slit across the longitudinal direction is a triangle. Referring to Fig. 1F, which is another cross-sectional view through line A-A' of the microcuvette 100 according to an embodiment of the present invention. Fig. 1F shows the changes in width of the drainage slit 122 and at the junctions of the optical measuring slit 124 and the protecting slit 126. The change in width at the connecting place between the protecting slit 126 and the optical measuring slit 124 can be also observed by this cross-sectional view. Therefore, the inner walls of the optical measuring slit 124 can be observed through the protecting slit 126 in Fig. 1F. The difference between the cross-sectional views of Figs. 1B and 1F is the shape of the drainage slit 122. The shape of the drainage slit 122 shown in Fig. 1B is a rectangle, and the shape of the drainage slit 122 shown in Fig. 1F is a triangle. In the embodiment shown in Fig. 1F, the drainage slit 122 has an average width not larger than the optical measuring slit and a maximum width same as the width of the protecting slit 126. As long as the average width of the drainage slit 122 is not larger than the optical measuring slit, the sample can fill the drainage slit 122 first, and gradually fill the optical measuring slit 124 and the protecting slit 126.

In this embodiment, the width of the optical measuring slit 124 is smaller than that of the protecting slit 126, and thus the capillary force of the optical measuring slit 124 is larger. The speed of the sample flowing into the optical measuring slit 124 is faster than that of the protecting slit 126, and basically the optical measuring slit 124 is filled with the sample earlier than the protecting slit 126. The air inside the optical measuring slit 124 is pushed into the protecting slit 126, and exhausted to outside the microcuvette 100 through the exit slit 140. Therefore, it is not easy to produce bubbles in the optical measuring slit 124 during sampling.

After introducing the sample into the microcuvette 100, the entry slit 130 of the microcuvette 100 is cleaned by a wipe (not shown) to remove the sample left on the entry slit 130. The sample inside the slit 120 of the microcuvette 100 is drawn out by the capillary force of the wipe. At this point, the sample inside the protecting slit 126 is easier to be drawn, which protects the sample inside the optical measuring slit 124 from being affected by the wiping action.

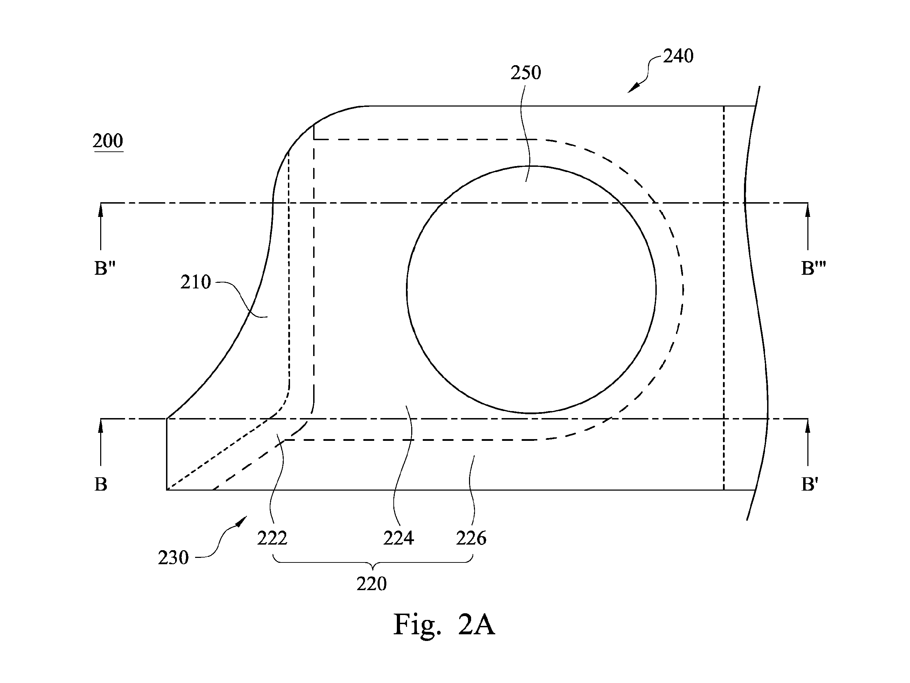

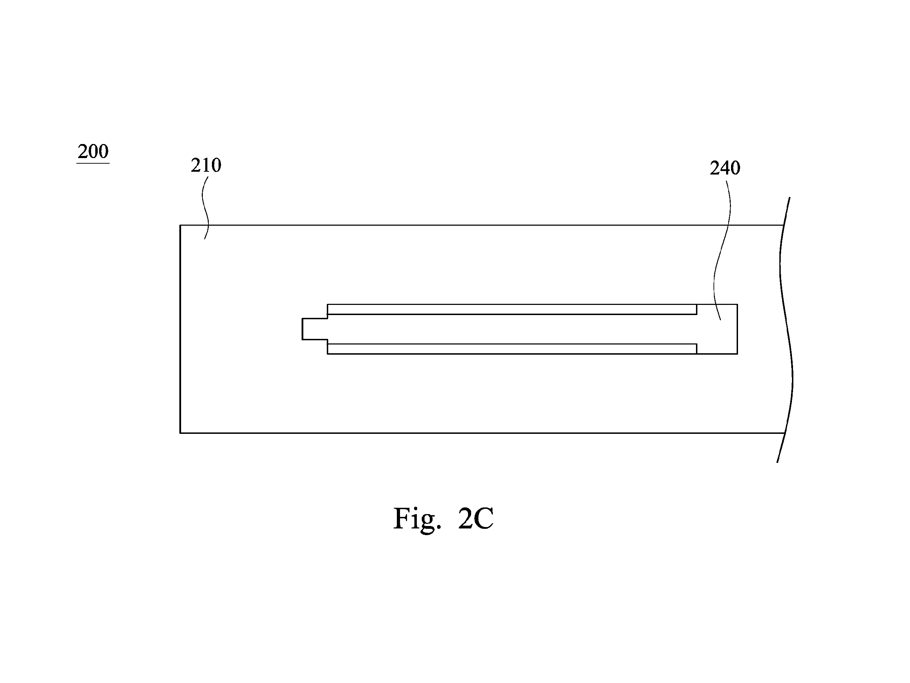

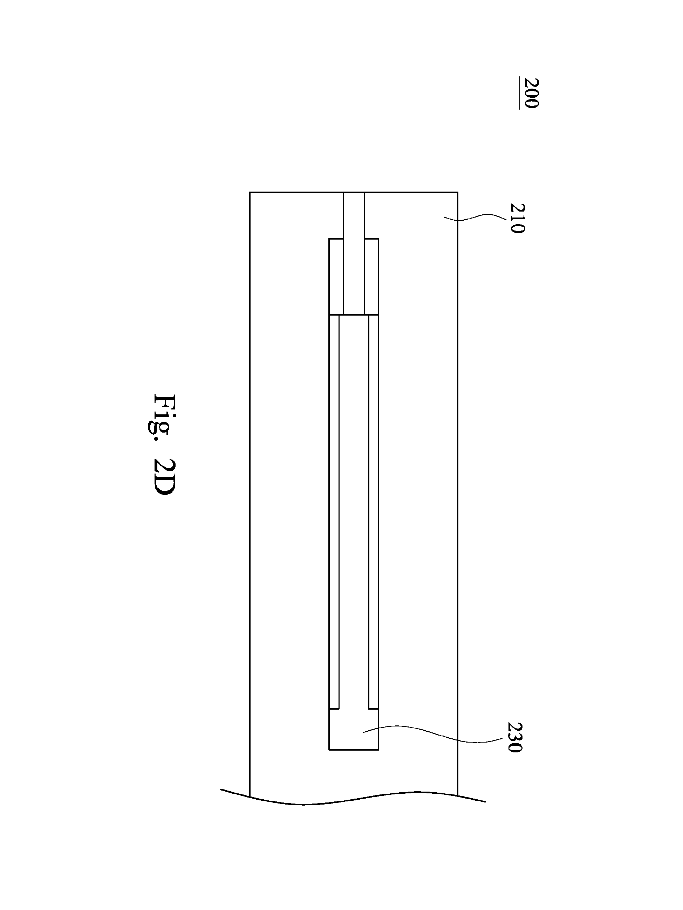

Referring to Figs. 2A, 2C, and 2D, which are a front view, a top view, and a bottom view of a microcuvette 200 according to an embodiment of the present invention respectively. For ease of description, a grip of the microcuvette 200 is omitted, and only a body 210 of the microcuvette 200 is shown in the figures. Referring to Fig. 2A, the microcuvette 200 includes the body 210, and the body 210 includes a slit 220, an entry slit 230, and an exit slit 240 inside. The slit 220 includes a drainage slit 222, an optical measuring slit 224, and a protecting slit 226. The drainage slit 222 directly connects to the entry slit 230, the optical measuring slit 224, and the protecting slit 226, and the drainage slit 222 connects to the protecting slit 226 at two places. The protecting slit 226 surrounds the optical measuring slit 224 at the place that is not connected to the drainage slit 222, and connects to the exit slit 240. The drainage slit 222 has an average width not larger than the optical measuring slit 224, and the protecting slit 226 has a width larger than the optical measuring slit 224. The dotted lines in Fig. 2A represent the junctions of different areas having different widths of the slit 220. Referring to Figs. 2C and 2D, the microcuvette 200 is sealed at the front, rear, left, and right sides, and the top and bottom sides of the microcuvette 200 are connected by the slit 220, the entry slit 230, and the exit slit 240. The positions and changes in width of the drainage slit 222, the optical measuring slit 224, and the protecting slit 226 can be seen through the exit slit 240 in the top view and the entry slit 230 in the bottom view.

In this embodiment, the entry slit 230 is connected to the drainage slit 222 and the protecting slit 226, and the exit slit 240 is connected to the drainage slit 222 and the protecting slit 126. Furthermore, in this embodiment, the width of the drainage slit 222 is smaller than that of the optical measuring slit 224, and the width of the optical measuring slit 224 is smaller than that of the protecting slit 226. Referring to Fig. 2C, the change in width at the junction of the drainage slit 222 and the protecting slit 226 can be observed by the exit slit 240, and the changes in width at the connecting place between the protecting slit 226 and the optical measuring slit 224 can be observed through the protecting slit 226. Referring to Fig. 2D, the drainage slit 222 and the protecting slit 226 can be observed by the entry slit 230, and the changes in width at the connecting places between the protecting slit 226 and the drainage slit 222 and between the protecting slit 226 and the optical measuring slit 224 can be observed through the protecting slit 226. In other words, the inner walls of the drainage slit 222 and the optical measuring slit 224 can be observed through the protecting slit 226.

When introducing sample into the microcuvette 200, the sample enters the microcuvette 200 from the entry slit 230. The sample flows into the drainage slit 222 and the protecting slit 226, and fills the drainage slit 222 first because the capillary force of the drainage slit 222 is larger than that of the protecting slit 226. Then, the sample gradually flows into and fills the optical measuring slit 224 and the protecting slit 226 through the connecting places between the drainage slit 222 and the optical measuring slit 224 and between the drainage slit 222 and the protecting slit 226.

The optical measuring slit 224 further includes a transparent region 250 for measuring light passing through. In this embodiment, the transparent region 250 has a circular shape, and located in the middle of the optical measuring slit 224. However, the transparent region 250 can be any shape, and be located in any portion of the optical measuring slit 224 as actual need. In this embodiment, the optical measuring slit 224 has a transparency higher than other parts of the body 210.

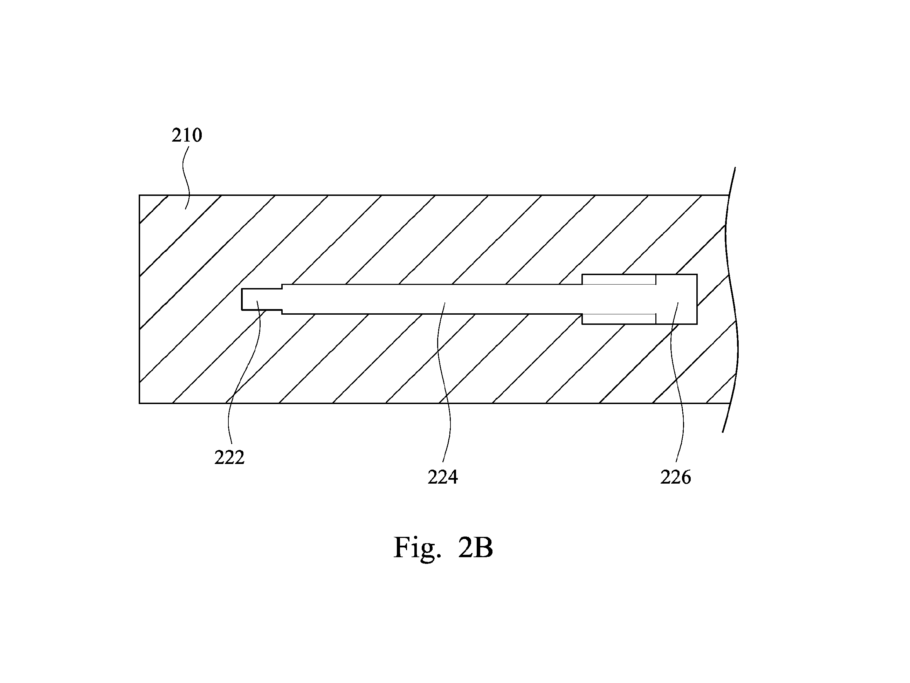

Fig. 2B is a cross-sectional view through line B-B' of the microcuvette 200, which the change in width of the slit 220 can be observed by this cross-sectional view. For ease of description, the grip of the microcuvette 200 is omitted, and only the body 210 of the microcuvette 200 is shown in Fig. 2B. In this embodiment, because the width of the protecting slit 226 is larger than that of the drainage slit 222 and the optical measuring slit 224, this cross-sectional view shows the changes in width at the junctions of the drainage slit 222, the optical measuring slit 224, and the protecting slit 226. The change in width at the connecting place between the protecting slit 226 and the optical measuring slit 224 can be also observed by this cross-sectional view through line B-B' of the microcuvette 200. Therefore, the cross-sectional view through line B-B' of the microcuvette 200 at the part of the protecting slit 226 includes the inner walls of the protecting slit 226 and the inner walls of the optical measuring slit 224.

The differences between the microcuvette 200 and the microcuvette 100 are that the drainage slit 222 connects to the protecting slit 226 at two places, and the protecting slit 226 surrounds the optical measuring slit 224 at the place that is not connected to the drainage slit 222. These differences do not affect the function of each element in the embodiment, and thus the microcuvette 200 has the same functions and advantages as the microcuvette 100.

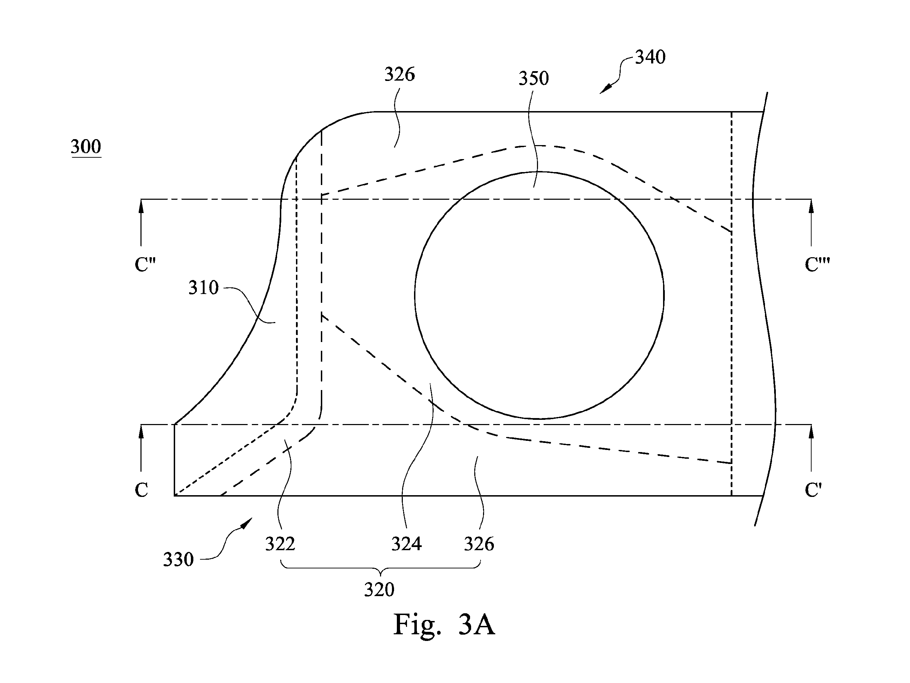

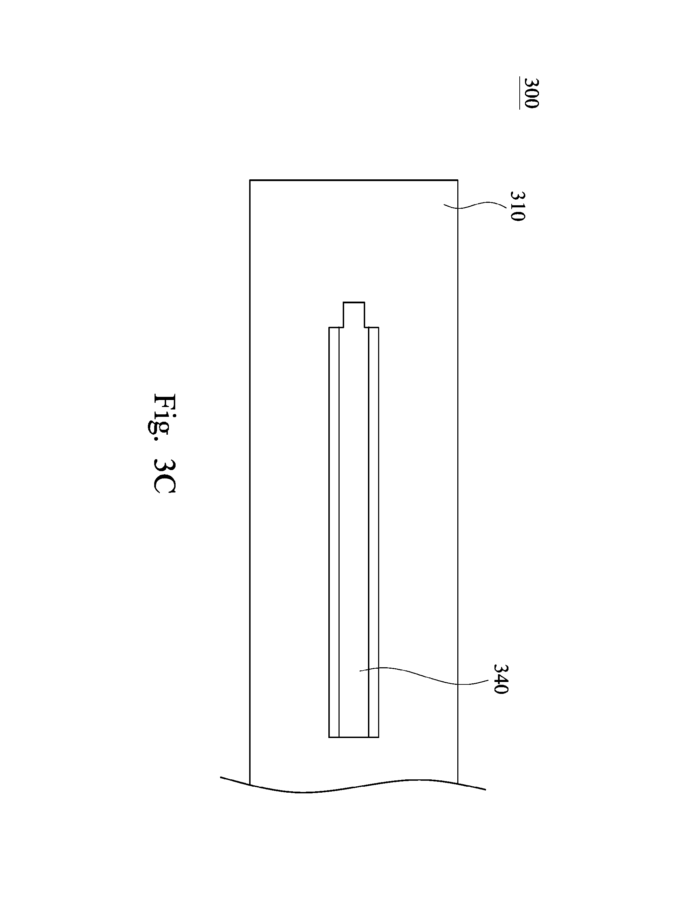

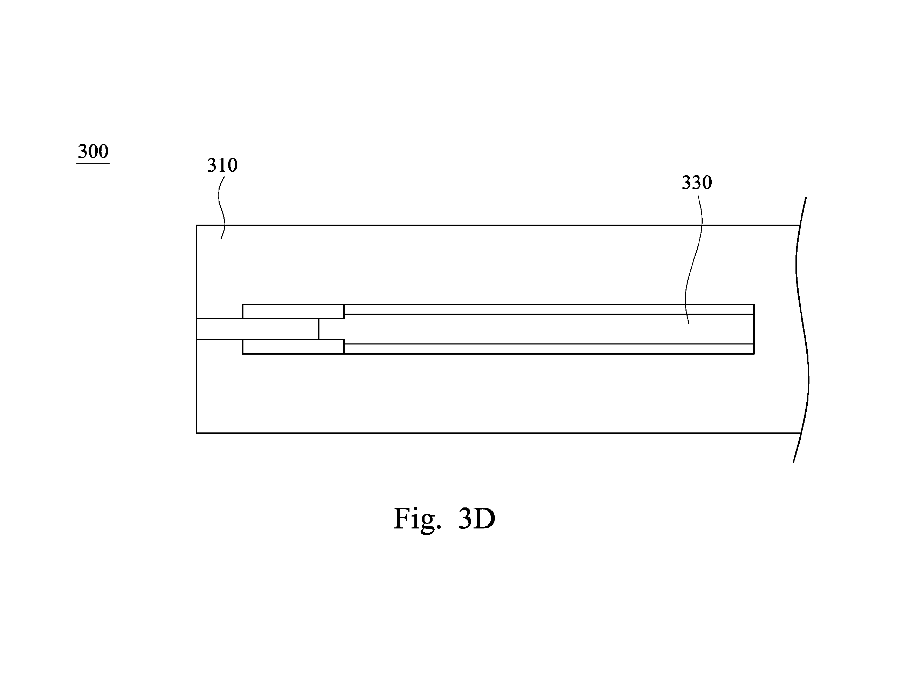

Referring to Figs. 3A, 3C, and 3D, which are a front view, a top view, and a bottom view of a microcuvette 300 according to an embodiment of the present invention respectively. For ease of description, a grip of the microcuvette 300 is omitted, and only a body 310 of the microcuvette 300 is shown in the figures. Referring to Fig. 3A, the microcuvette 300 includes the body 310, and the body 310 includes a slit 320, an entry slit 330, and an exit slit 340 inside. The slit 320 includes a drainage slit 322, an optical measuring slit 324, and two protecting slits 326. The drainage slit 322 directly connects to the entry slit 330, the optical measuring slit 324, and the two protecting slits 226. The two protecting slits 326 at least partially surrounds the optical measuring slit 324. One protecting slit 326 connects to drainage slit 322, the optical measuring slit 324, and the entry slit 330, and another protecting slit 326 connects to drainage slit 322, the optical measuring slit 324, and the exit slit 340. The drainage slit 322 has an average width not larger than the optical measuring slit 324, and the protecting slits 326 have a width larger than the optical measuring slit 324. The dotted lines in Fig. 3A represent the junctions of different areas having different widths of the slit 320. Referring to Figs. 3C and 3D, the microcuvette 300 is sealed at the front, rear, left, and right sides, and the top and bottom sides of the microcuvette 300 are connected by the slit 320, the entry slit 330, and the exit slit 340. The positions and changes in width of the drainage slit 322, the optical measuring slit 324, and the protecting slits 326 can be seen through the exit slit 340 in the top view and the entry slit 330 in the bottom view.

In this embodiment, the entry slit 330 is connected to the drainage slit 322 and one protecting slit 326, and the exit slit 340 is connected to the drainage slit 322 and another protecting slit 326. Furthermore, in this embodiment, the width of the drainage slit 322 is smaller than that of the optical measuring slit 324, and the width of the optical measuring slit 324 is smaller than that of the protecting slits 326. Referring to Fig. 3C, the change in width at the junction of the drainage slit 322 and the protecting slit 326 can be observed by the exit slit 340, and the change in width at the connecting place between the protecting slit 326 and the optical measuring slit 324 can be observed through the protecting slit 326. Referring to Fig. 3D, the drainage slit 322 and the protecting slit 326 can be observed by the entry slit 330, and the changes in width at the connecting places between the protecting slit 326 and the drainage slit 322 and between the protecting slit 326 and the optical measuring slit 324 can be observed through the protecting slit 326. In other words, the inner walls of the drainage slit 322 and the optical measuring slit 324 can be observed through the protecting slit 326.

When introducing sample into the microcuvette 300, the sample enters the microcuvette 300 from the entry slit 330. The sample flows into the drainage slit 322 and the protecting slit 326, and fills the drainage slit 322 first because the capillary force of the drainage slit 322 is larger than that of the protecting slit 326. Then, the sample gradually flows into and fills the optical measuring slit 324 and the protecting slits 326 through the connecting places between the drainage slit 322 and the optical measuring slit 324 and between the drainage slit 322 and the protecting slits 326.

The optical measuring slit 324 further includes a transparent region 350 for measuring light passing through. In this embodiment, the transparent region 350 has a circular shape, and located in the middle of the optical measuring slit 324. However, the transparent region 350 can be any shape, and be located in any portion of the optical measuring slit 324 as actual need. In this embodiment, the optical measuring slit 324 has a transparency higher than other parts of the body 310.

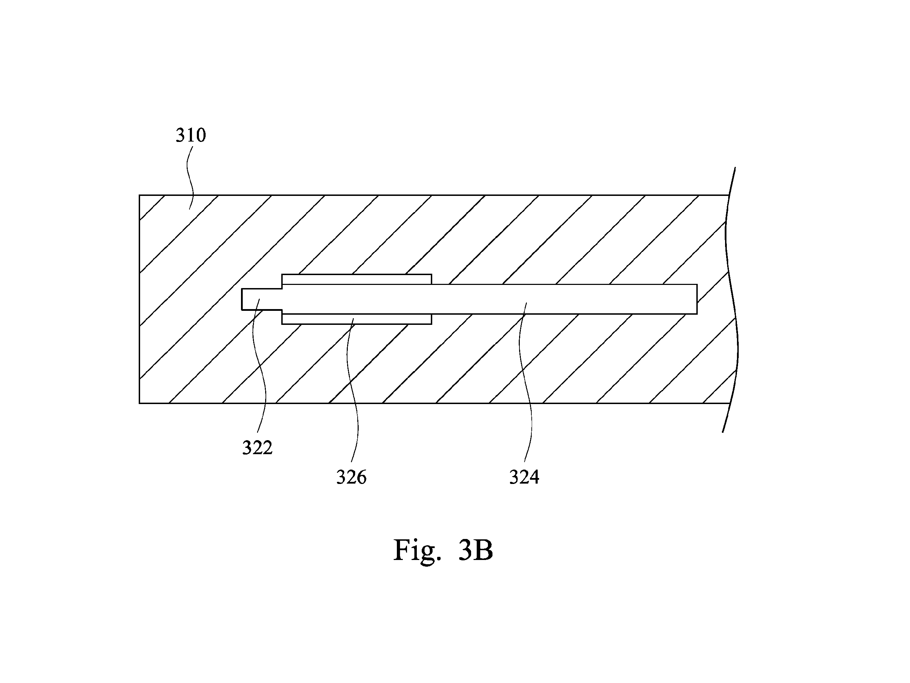

Fig. 3B is a cross-sectional view through line C-C' of the microcuvette 300, which the change in width of the slit 320 can be observed by this cross-sectional view. For ease of description, the grip of the microcuvette 300 is omitted, and only the body 310 of the microcuvette 300 is shown in Fig. 3B. In this embodiment, because the width of the protecting slit 326 is larger than that of the drainage slit 222 and the optical measuring slit 324, this cross-sectional view shows the changes in width at the junctions of the drainage slit 322, the optical measuring slit 324, and the protecting slit 326. The change in width at the connecting place between the protecting slit 326 and the optical measuring slit 324 can be also observed by this cross-sectional view through line C-C' of the microcuvette 300. Therefore, the cross-sectional view through line C-C' of the microcuvette 300 at the part of the protecting slit 326 includes the inner walls of the protecting slit 326 and the inner walls of the optical measuring slit 324.

The difference between the microcuvette 300 and the microcuvette 100 is that the microcuvette 300 includes two protecting slits 326. This difference does not affect the function of each element in the embodiment, and thus the microcuvette 300 has the same functions and advantages as the microcuvette 100.

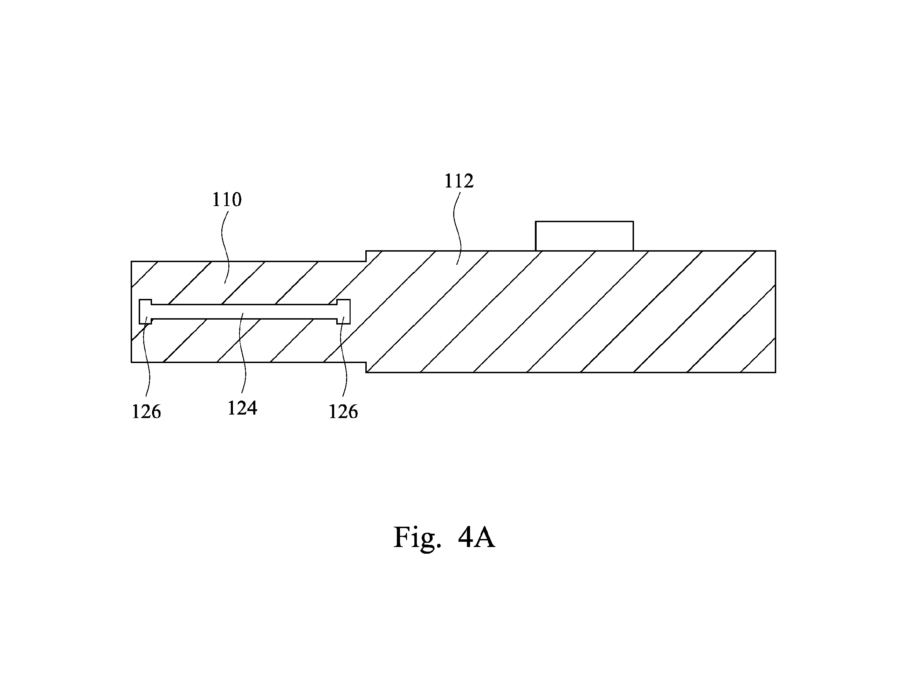

It is noteworthy that a portion of the drainage slit that is close to the exit slit may have the same width as the protecting slit, and thereby having the functions of the protecting slit. Figs. 4A through 4C show cross-sectional views of the microcuvette 100, 200, and 300 with a portion of the drainage slit 122, 222, and 322 being transformed into the protecting slit 126, 226, and 326, respectively.

Fig. 4A is a cross-sectional view through line A"-A'" of the microcuvette 100, which a portion of the drainage slit 122 close to the exit slit 140 is transformed into the protecting slit 126. Fig. 4A shows the cross-sectional view of the body 110 and the grip 112, and the changes in width of the slit 120 inside the body 110 can be observed. In this embodiment, because the width of the protecting slit 126 is larger than that of the optical measuring slit 124, the change in width at the junctions of the protecting slit 126 and the optical measuring slit 124 can be observed in Fig. 4A.

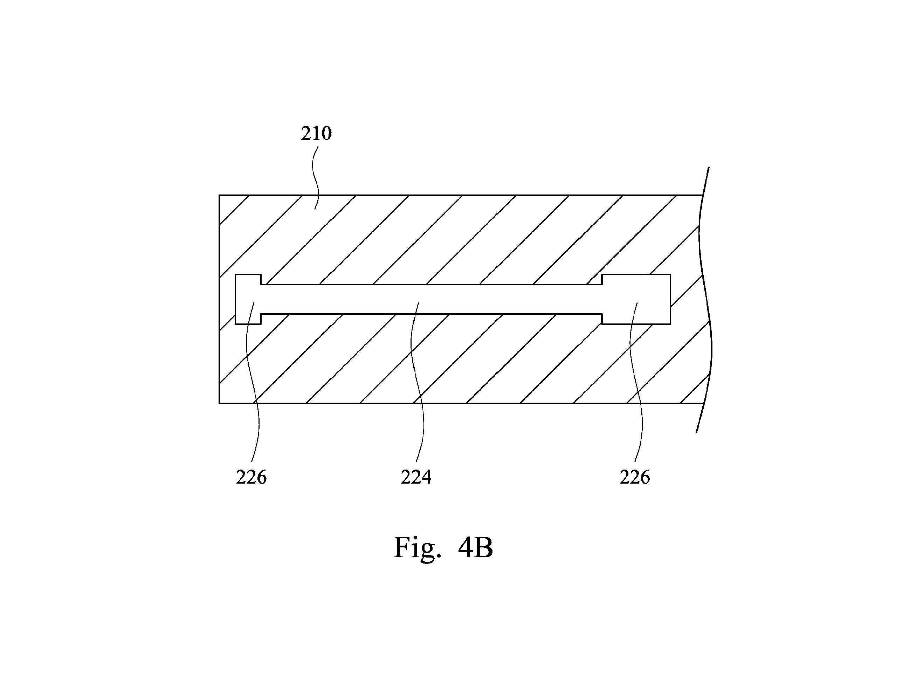

Fig. 4B is a cross-sectional view through line B"-B'" of the microcuvette 200, which a portion of the drainage slit 222 close to the exit slit 240 is transformed into the protecting slit 226. Fig. 4B shows the cross-sectional view of the body 210, and the changes in width of the slit 220 inside the body 210 can be observed. In this embodiment, because the width of the protecting slit 226 is larger than that of the optical measuring slit 224, the change in width at the junction of the protecting slit 226 and the optical measuring slit 224 can be observed in Fig. 4B.

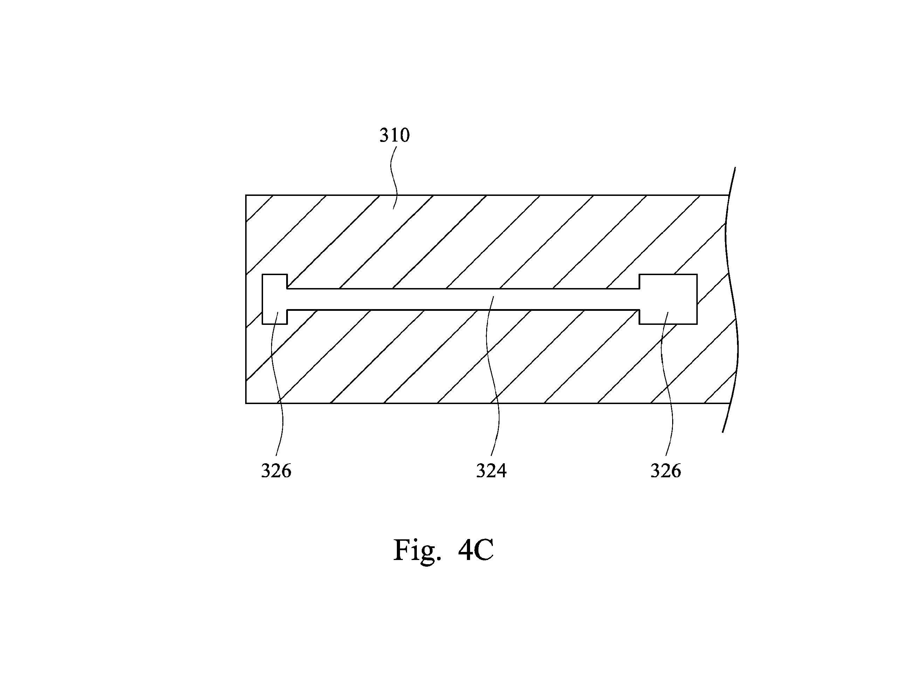

Fig. 4C is a cross-sectional view through line C"-C'" of the microcuvette 300, which a portion of the drainage slit 322 that is close to the exit slit 340 is transformed into the protecting slit 326. Fig. 4C shows the cross-sectional view of the body 310, and the changes in width of the slit 320 inside the body 310 can be observed. In this embodiment, because the width of the protecting slit 326 is larger than that of the optical measuring slit 324, the change in width at the junction of the protecting slit 326 and the optical measuring slit 324 can be observed in Fig. 4C.

The microcuvette of the present invention utilizes capillary action. Capillary force is inversely proportional to the slit width, and by adjusting the slit width of different areas, the capillary force of the drainage slit is not less than the optical measuring slit, and the capillary force of the protecting slit is less than the optical measuring slit. According to one embodiment of the present invention, the average width of the drainage slit is 0.1-0.3 mm, preferably 0.15 mm. The width of the optical measuring slit is 0.1-0.3 mm, preferably 0.15 mm. The width of the protecting slit is 0.2-0.4 mm, preferably 0.3 mm.

When sample enters the microcuvette by the entry slit, under the action of capillary force, the sample quickly fills the drainage slit first, and then gradually fills the optical measuring slit and the protecting slit. The flowing speeds and distances of the sample in the optical measuring slit and the protecting slit are different, and thus in the process of flowing, bubbles may be produced at the connecting place between the optical measuring slit and the protecting slit. Because the capillary force of the optical measuring slit is larger than the protecting slit, the flowing speed of the sample is faster in the optical measuring slit. Therefore, if there are bubbles, the bubbles will gradually flows into the protecting slit with the sample, and thereby the bubbles are pushed to the protecting slit, and exhausted to outside the microcuvette through the exit slit. Even if there are bubbles left in the slit of the microcuvette, the bubbles are left inside the protecting slit, not inside the optical measuring slit, which can prevent the bubbles from affecting measurement results. Furthermore, when sampling, the entry slit is located at a relatively bottom position, and the exit slit, which is opposite to the entry slit, is located at a relatively top position. Because of the physical characteristic of air, the bubbles are tend to move upward, and may be exhausted to outside the microcuvette through the exit slit.

In practice, after sampling, the entry slit is wiped to remove the sample left at the entry slit. The sample inside the measuring slit of current cuvette is prone to be drawn out through the entry slit because of the capillary action of the wipe. It is easy to produce bubbles in the measuring slit after sample being drawn out, and thus affects the measurement result. By setting the protecting slit, due to the location of the protecting slit, the sample inside the protecting slit is drawn out first while wiping the entry slit. Therefore, it can avoid sample being drawn out from the optical measuring slit, and affecting the measurement result.

The microcuvette of the present invention may be made of any suitable materials for making cuvette, such as hydrophilic, optically transparent polystyrene (PS) and poly(methyl methacrylate) (PMMA). According to one embodiment of the present invention, the microcuvette is an integrally molded structure. The mold for microcuvette molding includes foil, and a part of the foil corresponding for forming the transparent region in the optical measuring slit is polished to increase the transparency of the transparent region of the microcuvette made, which is beneficial for measuring light passing through.

The structure of the microcuvette that the present invention proposed can reduce the probability of producing bubbles. Furthermore, adjusting the slit width of different areas by utilizing capillary action, the capillary force of the drainage slit is not less than the optical measuring slit, and the capillary force of the protecting slit is less than the optical measuring slit. Therefore, if bubbles are produced, the bubbles are pushed into the protecting slit, or exhausted to outside the microcuvette through the exit slit, which prevents the bubbles from affecting measurement results. Another function of setting the protecting slit is that when wiping the cuvette, the sample in the protecting slit is drawn out first, which can prevent the sample in the optical measuring slit from being drawn out, and prevent the measurement result from being affected. Moreover, the structural design of the microcuvette can avoid generating interference factors at the optical measuring slit while molding into an integrally molded structure.

## Claims

1. A microcuvette (100, 200, 300), comprising a body (110, 210, 310), the body (110, 210, 310) comprises a slit (120, 220, 320) inside, the slit (120, 220, 320) connects to an entry slit (130, 230, 330) and an exit slit (140, 240, 340), the entry slit (130, 230, 330) and the exit slit (140, 240, 340) are on the opposite sides of the body (110, 210, 310), the microcuvette (100, 200, 300) is **characterized in that** the slit (120, 220, 320) comprises:
a drainage slit (122, 222, 322);
an optical measuring slit (124, 224, 324); and
a protecting slit (126, 226, 326),
wherein the drainage slit (122, 222, 322) directly connects to the entry slit (130, 230, 330), the optical measuring slit (124, 224, 324), and the protecting slit (126, 226, 326), the protecting slit (126, 226, 326) at least partially surrounds the optical measuring slit (124, 224, 324), and connects to the exit slit (140, 240, 340), the drainage slit (122, 222, 322) has an average width not larger than the optical measuring slit (124, 224, 324), and the protecting slit (126, 226, 326) has a width larger than the optical measuring slit (124, 224, 324).

2. The microcuvette (100, 200, 300) of claim 1, wherein at least a portion of the protecting slit (126, 226, 326) is located between the entry slit (130, 230, 330), the drainage slit (122, 222, 322), and the optical measuring slit (124, 224, 324).

3. The microcuvette (200) of claim 1, wherein the protecting slit (226) connects to the drainage slit (222), and surrounds the optical measuring slit (224).

4. The microcuvette (300) of claim 1, wherein the slit (320) comprises a plurality of the protecting slits (326), and at least one of the protecting slits (326) is located between the entry slit (330), the drainage slit (322), and the optical measuring slit (324).

5. The microcuvette (100, 200, 300) of claim 1, wherein the optical measuring slit (124, 224, 324) further comprises a transparent region (150, 250, 350).

6. The microcuvette (100, 200, 300) of claim 5, wherein the transparent region (150, 250, 350) is located in a portion of the optical measuring slit (124, 224, 324).

7. The microcuvette (100, 200, 300) of claim 5, wherein the transparent region (150, 250, 350) is located in the whole optical measuring slit (124, 224, 324).

8. The microcuvette (100, 200, 300) of claim 5, wherein the optical measuring slit (124, 224, 324) has a transparency higher than other parts of the body (110, 210, 310).

9. The microcuvette (100, 200, 300) of claim 1, wherein the average width of the drainage slit (122, 222, 322) is 0.1-0.3 mm.

10. The microcuvette (120, 220, 320) of claim 1, wherein the width of the optical measuring slit (124, 224, 324) is 0.1-0.3 mm.

11. The microcuvette (100, 200, 300) of claim 1, wherein the width of the protecting slit (126, 226, 326) is 0.2-0.4 mm.

12. The microcuvette (100, 200, 300) of claim 1, wherein the material of the microcuvette (100, 200, 300) is polystyrene or poly(methyl methacrylate).

13. The microcuvette (100, 200, 300) of claim 1, wherein the microcuvette (100, 200, 300) is an integrally molded structure.
